# EUROPEAN PATENT APPLICATION

(11) **EP 2 907 788 A1**
(43) Date of publication of application: **19.08.2015**
(21) Application number: 14003060.2
(22) Date of filing: 04.09.2014
(51) Int. Cl.: C01B 3/04

(54) **Procedure for obtaining and controlling clean energy by using water, converting water into fuel through extraction and use of hydrogen and respective molecular gas expansion equipment**

(30) Priority: 17.02.2014 BR 102014003647
(71) Applicant: Fernandes Beraldo, José Roberto, 06853-090 State of Sao Paulo (BR)
(72) Inventor: Fernandes Beraldo, José Roberto, 06853-090 State of Sao Paulo (BR)
(74) Representative: Flosdorff, Jürgen

(57) **Abstract**

**"PROCEDURE FOR OBTAINING AND CONTROLLING CLEAN ENERGY BY USING WATER, CONVERTING WATER INTO FUEL THROUGH EXTRACTION AND USE OF HYDROGEN AND RESPECTIVE MOLECULAR GAS EXPANSION EQUIPMENT",** pertains to the field of application of energy generating processes and equipment, converting water into fuel by extracting hydrogen (fuel) and oxidizer (oxygen) from water, driving them directly to the engine's explosion chamber, which process uses the water in the form in which it is found, breaking molecules and separating oxygen from hydrogen, where this last one is refined and expanded in real-time, converting water to fuel for immediate burn.

## Description

The present specification of this invention patent application refers to a unique, innovative, and revolutionary procedure for obtaining and controlling clean energy by using water, converting water into fuel through the extraction and use of hydrogen and respective molecular gas expansion equipment, pertaining to the application field of energy-generating processes and equipment.

As is generally known, the world has been facing a great energy crisis, with tendency to worsen during the next years due to the shortage of fossil fuels, bringing, consequently, an enormous problem and concern for future generations.

Therefore, the search for alternatives capable of supplying the demand becomes increasingly necessary, and yet taking into consideration that there will be an increasing contingent population to supply everyone satisfactorily.

On the other hand, the solutions must be always focused on finding options that are preferably clean, which do not emit gases, waste, substances or contaminant particles in the air, otherwise, besides contributing with the already experienced negative greenhouse effects, the number of ill people affected by respiratory conditions, poor health and mortality rates will unfortunately tend to increase.

The challenges are immense, besides the need of to search alternative energies capable of supplying entire the populations need, them must not be contaminants and must find an ideal balance between the nature and all living beings; therefore, close attention must be given to the fragile environment. It is known that any imbalance regarding these factors results in disastrous chain reactions.

In the mainstay of all these issues, different researches have been performed in practically all areas of human knowledge. The agriculture sector, for example, is noteworthy due to the development of serious studies and applications to some diversity of plants and vegetables, such as sugarcane, beets, corn, soy, among others, in order to transform them into biodiesel.

One of the promising alternatives is about the use of Ethanol, which is extracted from sugarcane and some types of vegetables, being widely employed with pioneerism in Brazil, and in increasing rise in countries such as the United States, Canada, China, India, and Colombia.

Although the Ethanol be a clean and non-contaminant fuel, it fails into the production issue, being subjected to each Country's climatic conditions and harvest result of each type of product where it have been extracted from, which is indeed one of its major drawbacks due to lack of diffusion and culture of its worldwide derivatives

As it is known, fuels are essential products to the modern world, where energy is extracted to drive machines, cars, engines, factories, power plants, etc., which today is absolutely unthinkable without their presence.

As solutions that are relatively close to the matter disclosed in the patent application in reference, hybrid mechanisms that also employ electric power for their respective performances, being able to use various storage batteries or hydrogen cells to generate the necessary energy, are known. However, the storage is required in a high-pressure cylinder together with another oxygen cylinder which requires be periodically refueled. Together with the enormous physical space occupied by the cylinders and the almost inexistence of posts with refueling structures, its use becomes expensive, unattractive and practically impracticable.

Due to the presented facts and problems, the use of hydrogen was envisioned as a new option, which, although was not widespread, was particularly due to the creation of an engine and specific equipment for this type of fuel that has still not been fully performed. From a conventional model, it is concluded that 61 liters per minute are needed to maintain a 1.0 engine at 500 rpm (on idle speed) functioning for some time.

It is emphasized that by using this type of fuel only dry vapor was obtained at the gas outlet, due to high temperatures reached in the explosion chamber, which exited from the escape pipe, cooling and returning to the physical state of water steam.

The level of contaminants is equal to zero when using 100% of oxyhydrogen. However, by employing a potentiator at 30%, there's the same lower percentage of contaminant emissions with an increase of 8% to 12% in power, considering that this element is three times more powerful than gasoline, burning approximately 1.5 times faster (hydrogen has an explosion power that is eight times greater than the gasoline).

Therefore, the objective of the present invention is to extract clean, non-contaminating fuel, without waste and without damages to the environment.

Another objective is the use of a fuel in different combustion engines (machines, vehicles, equipment, etc.), without having to implement alterations on them.

Another objective is to make available a lower-cost fuel, in comparison to traditional fuels, which, depending of the strategies of holding companies and interests / management of Government Bodies, may be more accessible to a greater part of the population.

Another objective is to offer a highly feasible alternative to gradually substitute the use of fossil fuels and contaminants which harm the environment, contribute to the greenhouse effect and the worrying and disastrous consequences of global warming.

Another objective concerns its use as a potentiator by increasing the autonomy of machines and vehicles.

Another objective is also to use it as a main fuel source to drive engines, machines, and vehicles in general.

These and other objectives are fully reached by the present procedure for obtaining and controlling clean energy by using water, converting water into fuel through the extraction and use of hydrogen and respective molecular gas expansion equipment, acting in a way to convert water into fuel, by extracting hydrogen (fuel) and the oxidizing (oxygen) from water, which figures as a main and abundant natural source of such elements by driving them directly into the engine's explosion chamber.

It also brings as an important differential the efficiency in comparison to electric consumption, allied to the high production of the main element (hydrogen) used as a clean fuel, emitting only water steam instead of harmful toxic gases and, therefore, without implying negative impact on the environment.

Therefore, its raw material base is water, which is abundant throughout the planet, and which can be employed throughout different physical states (brackish, hard, dirty, salty, blurred, limpid water, etc.), which process in question separates the oxygen molecules from the hydrogen molecules and with the minimum of electricity by using a thermo-magnetic reactor and accelerator, reaching the baseline of, approximately, 45-liters per minute with perfect dissociation control, without crashes, or electric fatigues of any of the engine's components in order for them to operate in absolutely normal conditions.

Nothing prevents the improvement of electric dissociation, enabling the process to consume less energy and produce more oxyhydrogen.

Moreover, the system brings some peculiarities, such as the immediate burn of the dissociation results, not maintaining gas accumulation (real-time), in other words, only the necessary volume is produced to perform the action.

An intelligent system commands all of the action making the engine have an immediate response, in sync with the accelerator's movement. All of the control is computerized, allowing the access to sensor data which are found in the engine, sending readings of situations, status, occurrences, and general conditions in real-time of data such as, temperature, pressure, rotation, torque, burning volume and gas outlets, such as carbon monoxide, which is also reused during burning, passing through the process where it will be reused as an oxidizer.

Monitoring is crucial to evaluate the engine's state in real-time and know if the mixture is weak or, if more or less oxygen is needed for better functioning, in which case, besides informing everything about the dissociation cell's performance, from temperature to plate saturation, hydrogen and oxygen production levels, amperage and voltage used during fast, low and idle speed, etc.

The whole system is self sustainable as from its own battery used to start the engine, even informing if the battery is suffering from some depreciation due to the use of the dissociation cell, allowing total control of the state in which the engine's working moment performs only with hydrogen produced in real-time.

It is emphasized that the generated fuel is produced in the exact moment the engine's response is necessary (real-time), and without the existence of gas accumulation. The only existing reservoir is of potable water or non-potable water, which can be located just above the dissociation cell, as well as, in the bubble trap, which avoids the entry of foam into the admission system.

In synthesis, the procedure for obtaining and controlling clean energy by using water, converting water into fuel through the extraction and use of hydrogen and respective molecular gas expansion equipment, water used in the form in which it is found, breaking molecules and separating oxygen from hydrogen, where this last one is refined and expanded in real-time, converting water to fuel for immediate burn.

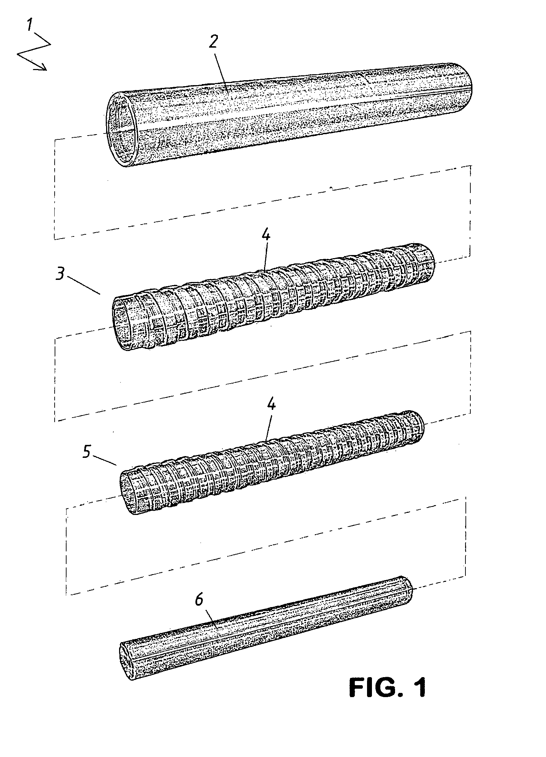

The present specification includes drawings that illustrate the molecular gas expansor cylinder, represented on figure 1, which demonstrates its main and respective internal components separated in magnified view.

Regarding its constructive aspect, said molecular gas expansor (1) comprises an external cylinder (2), which receives in its interior a first cylinder (3) with spiral ducts (4) that receives in its interior a second cylinder (5), which also has spiral ducts (4), which in turn receives a last magnetic cylinder (6), in which assembly practically processes and obtains energy from the procedure presented herein.

Therefore, and as broadly demonstrated, the application in question is substantiated from a revolutionary innovation of extensive applications and enormous utility, lining itself with its own characteristics and endowed with basic novelty requirements, thus, due to all of these aspects, the object of the present application makes itself worthy of protection as Invention Patent, which is claimed herein.

## Claims

1. **- "PROCEDURE FOR OBTAINING AND CONTROLLING CLEAN ENERGY BY USING WATER, CONVERTING WATER INTO FUEL THROUGH EXTRACTION AND USE OF HYDROGEN AND RESPECTIVE MOLECULAR GAS EXPANSION EQUIPMENT",** energy generating processes and equipment, wherein the converting water into fuel by extracting hydrogen (fuel) and oxidizer (oxygen) from water, driving them directly to the engine's explosion chamber, which process uses water in the form in which it is found, breaking molecules and separating oxygen from hydrogen, where this last one is refined and expanded in real-time, converting water into fuel for immediate burn.

2. **- "PROCEDURE FOR OBTAINING AND CONTROLLING CLEAN ENERGY BY USING WATER, CONVERTING WATER INTO FUEL THROUGH EXTRACTION AND USE OF HYDROGEN AND RESPECTIVE MOLECULAR GAS EXPANSION EQUIPMENT",** according to claim 1, wherein the use of water as raw material throughout different physical states brackish, hard, dirty, salty, blurred, limpid water, etc.).

3. **- "PROCEDURE FOR OBTAINING AND CONTROLLING CLEAN ENERGY BY USING WATER, CONVERTING WATER INTO FUEL THROUGH EXTRACTION AND USE OF HYDROGEN AND RESPECTIVE MOLECULAR GAS EXPANSION EQUIPMENT",** wherein the capacity of separating oxygen molecules from hydrogen molecules and with the minimum of electricity by using a thermo-magnetic reactor and accelerator, reaching the baseline of, approximately, 45-liters per minute with perfect dissociation control, without crashes, or electric fatigues of any of the engine's components in order for them to operate in absolutely normal conditions, being able to improve electric dissociation, allowing the process to consume less energy and produce more oxyhydrogen.

4. **- "PROCEDURE FOR OBTAINING AND CONTROLLING CLEAN ENERGY BY USING WATER, CONVERTING WATER INTO FUEL THROUGH EXTRACTION AND USE OF HYDROGEN AND RESPECTIVE MOLECULAR GAS EXPANSION EQUIPMENT",** according to claims 1 and 3, wherein possibility of immediate burn of the dissociation result, not maintaining gas accumulation (real-time), only producing the necessary volume to perform the action.

5. **- "PROCEDURE FOR OBTAINING AND CONTROLLING CLEAN ENERGY BY USING WATER, CONVERTING WATER INTO FUEL THROUGH EXTRACTION AND USE OF HYDROGEN AND RESPECTIVE MOLECULAR GAS EXPANSION EQUIPMENT",** wherein adding an intelligent system that commands all of the action causing the engine to have an immediate response in sync with the accelerator's movement, where all of the control is computerized, allowing the access to sensor data which are found in the engine, sending readings of situations, status, occurrences, and general conditions in real-time of data such as temperature, pressure, rotation, torque, burning volume and gas outlets, such as carbon monoxide, which is also reused during burning, passing through the process where it will be reused as an oxidizer.

6. **- "PROCEDURE FOR OBTAINING AND CONTROLLING CLEAN ENERGY BY USING WATER,**
**CONVERTING WATER INTO FUEL THROUGH EXTRACTION AND USE OF HYDROGEN AND RESPECTIVE MOLECULAR GAS EXPANSION EQUIPMENT",** according to claims 1 and 3, wherein the generated fuel is produced in the exact moment the engine's response is necessary (real-time) and without the existence of gas accumulation, wherein the only existing reservoir is of potable water, which can be located just above the dissociation cell, as well as in the bubble trap, which avoids the entry of foam into the admission system.

7. **- "MOLECULAR GAS EXPANSION EQUIPMENT",** wherein a molecular gas expansor (1) comprising an external cylinder (2), which receives in its interior a first cylinder (3) with spiral ducts (4) that receives in its interior a second cylinder (5), which also has spiral ducts (4), which in turn receives a last magnetic cylinder (6).
